# EUROPÄISCHE PATENTANMELDUNG

(11) **EP 0 763 923 A2**
(43) Veröffentlichungstag der Anmeldung: **19.03.1997**
(21) Anmeldenummer: 96110257.1
(22) Anmeldetag: 26.06.1996
(51) Int. Cl.: H04M 11/02

(54) **Türfreisprecheinrichtung**

(30) Priorität: 18.09.1995 DE 19534539
(71) Anmelder: Deutsche Telekom AG, 53113 Bonn (DE)
(72) Erfinder: Dihlmann, Klaus, Dipl.-Ing., 64839 Münster-Altheim (DE)

(57) **Zusammenfassung**

Die Erfindung betrifft eine Türfreisprechanlage, die einen Gegensprechverkehr zwischen einer Türsprechstelle und einem Fernsprechapparat ermöglicht, der bei einem von der Türfreisprechstelle gerufenen Teilnehmer angeschlossen ist. Die Erfindung hat sich die Aufgabe gestellt, bestehende Türfreisprechstellen mit einer Vierdraht-Schnittstelle an nachträglich installierte TK-Anlagen mit einer Zweidraht-Schnittstelle anschalten zu können. Dies erreicht die Erfindung dadurch, daß ein Anpassungsmodul mit einer Zweidraht-Vierdraht-Umsetzeinrichtung zwischen die TK-Anlage und die Türsprechstelle geschaltet ist.

## Beschreibung

Die Erfindung betrifft eine Türfreisprechanlage, die einen Gegensprechverkehr zwischen einer Türsprechstelle und einem Fernsprechapparat ermöglicht, der bei einem von der Türfreisprechstelle gerufenen Teilnehmer angeschlossenen ist.

Es sind Türfreisprechanlagen bekannt, bei denen die installierten Türsprechstellen eine Vierdraht-Schnittstelle aufweisen, um einen Gegensprechverkehr mit einem von der Türsprechstelle gerufenen Teilnehmer zu ermöglichen, wobei in der Wohnung des Teilnehmers ein gewöhnlicher Fernsprechapparat angeschlossen ist. Inzwischen wurden TK-Anlagen entwickelt, deren Funktionen auch bei einer Türfreisprechanlage mitbenutzt werden. Derartige TK-Anlagen sind mit einer Zweidraht-Schnittstelle ausgerüstet, an die ebenfalls mit einer Zweidraht-Schnittstelle ausgerüstete Türsprechstellen anschaltbar sind. Derzeit ist es nicht möglich, bestehende Türsprechstellen mit einer Vierdraht-Schnittstelle an die leistungsfähigen TK-Anlagen anzuschalten, die eine Zweidraht-Schnittstelle enthalten.

Der Erfindung liegt daher die Aufgabe zugrunde, handelsübliche Türsprechstellen mit einer Vierdraht-Schnittstelle an eine TK-Anlage mit einer Zweidraht-Schnittstelle anschalten zu können.

Dieses technische Problem wird mit den Merkmalen des Anspruchs 1 gelöst. Dazu wird ein Anpassungsmodul mit einer Zweidraht-Vierdraht-Umsetzeinrichtung zwischen die Türsprechstelle und die TK-Anlage geschaltet.

Vorteilhafte Weiterbildungen sind in den Unteransprüchen angegeben.

Zweckmäßigerweise kann die Zweidraht-Vierdraht-Umsetzeinrichtung als Gabelschaltung ausgebildet sein. Das Anpassungsmodul enthält bekannte Einrichtungen, wie eine Klingeltasten-Auswerteeinrichtung, einen Wahlgenerator zur Erzeugung von Impulswahl- (IWV) oder Mehrfrequenz- (MFV) Wahlsignalen, einen Stromart-Detektor, der unter Ansprechen auf einen Wechselstrom über einen Umschalter einen Türöffner aktiviert und unter Ansprechen auf einen Betriebsgleichstrom den Hör-Sprech-Weg von der Türsprechstelle über die Zweidraht-Vierdraht-Umsetzeinrichtung zur TK-Anlage bzw. zum Fernsprechapparat des gerufenen Teilnehmers durchschaltet, sowie einen Lautsprecher- und Mikrophonverstärker, die je über ein Potentiometer einstellbar und mit dem Lautsprecher bzw. dem Mikrophon der Türsprechstelle verbunden sind.

Die TK-Anlage umfaßt eine fernmeldetechnisch bekannte Steuereinrichtung, eine Wahlerkennungseinrichtung und ein Koppelfeld, das mit einer TFE-Schaltung verbunden ist, die wiederum über die Zweidraht-Schnittstelle der TK-Anlage mit dem Anpassungsmodul verbunden ist. Die TFE-Schaltung ist in der Offenlegungsschrift DE-OS 42 36 565 im einzelnen beschrieben. Der Inhalt dieser Druckschrift wird hiermit ausdrücklich mit eingebunden.

Die Erfindung wird nachstehend anhand eines Ausführungsbeispiels in Verbindung mit den beiliegenden Zeichnungen näher erläutert. Es zeigen:
- Fig. 1: ein vereinfachtes Blockschaltbild einer Türfreisprechanlage, in der das erfindungsgemäße Anpassungsmodul verwirklicht ist und
- Fig. 2: ein detailliertes Blockschaltbild des erfindungsgemäßen Anpassungsmoduls nach Fig. 1.

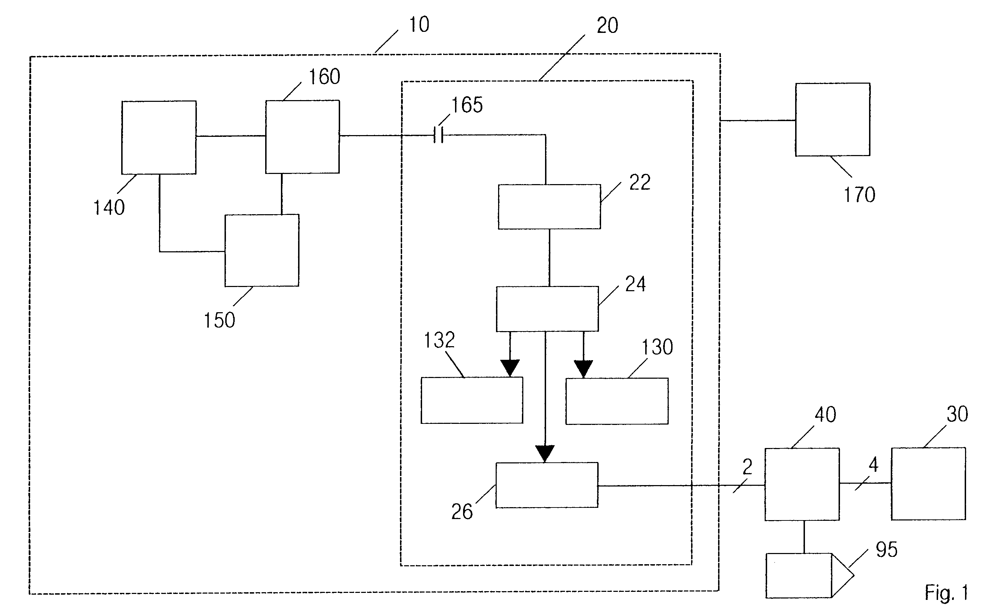

In Fig. 1 ist eine Türfreisprechanlage dargestellt, die im wesentlichen als internes Fernsprechnetz eine bekannte TK-Anlage 10, ein erfindungsgemäßes Anpassungsmodul 40 und eine bekannte Türfreisprechstelle 30 aufweist. An die TK-Anlage 10 sind mehrere Fernsprechapparate (nicht dargestellt) anschaltbar, die allesamt von der Türfreisprechstelle 30 gerufen werden können. Wie Fig. 1 zeigt, ist die TK-Anlage 10 an ein externes öffentliches oder privates Fernsprechnetz 170 anschaltbar. Die an sich bekannte TK-Anlage 10 enthält eine Steuereinrichtung 140, eine Wahlerkennungseinrichtung 150, ein Koppelfeld 160, das beispielsweise kapazitiv (mittels eines Kondensators 165) mit einer TFE-Adapterschaltung 20 (TFE steht für Türfreisprech-Einrichtung) angekoppelt sein kann. Diese Komponenten sind allesamt bekannt. Die mit 20 bezeichnete TFE-Adapterschaltung ist aus der DE-OS 42 36 565 bekannt und dort ausführlich beschrieben. Der Inhalt dieser Schrift wird hiermit unter Bezugnahme mit aufgenommen, so daß eine umfangreiche Beschreibung der TFE-Adapterschaltung in Verbindung mit der Funktion der TK-Anlage entfallen kann. Im einzelnen kann die TFE-Adapterschaltung 20 eine Wahlerkennungseinrichtung 22 aufweisen, die verschiedene Kennziffern zum Steuern der Türfreisprechanlage, wie z.B. eine Kennziffer zum Betätigen eines Türöffners 95 oder Kennziffern für einen Ruhe- oder Betriebsgleichstrom, detektieren kann. Die Wahlerkennungseinrichtung 22 steuert eine Umschalt-Steuereinrichtung 24, die in Verbindung mit einer weiteren Umschalteinrichtung 26 in Abhängigkeit von der von der Wahlerkennungseinrichtung 22 erkannten Kennziffer eine Konstantstromquelle 130 oder eine Wechselstromquelle 132 über die Umschalteinrichtung 26 an die Zweidraht-Schnittstelle der TK-Anlage anlegt. Bei der Zweidraht-Schnittstelle kann es sich um eine Zweidraht-TFE-Schnittstelle handeln, die durch die Telekom-Spezifikation 2 Dr.TFE-SS festgelegt ist. Die Energieversorgung des Anpassungsmoduls 40 und der Türfreisprechstelle 30 erfolgt in diesem Ausführungsbeispiel über die Energieversorgungsquelle 130, 132 der TK-Anlage 10. Als weitere Alternative ist es denkbar, eine externe Wechselstrom-Gleichstrom-Quelle zur Speisung der entsprechenden Komponenten vorzusehen. Es ist ebenfalls denkbar, das Anpassungsmodul 40 mit einer Gleichstromquelle auszustatten, die den Betriebsgleichstrom und den Ruhegleichstrom für die Türfreisprechstelle 30 liefert. Wie in Fig. 1 dargestellt ist, besitzt die bekannte Türfreisprechstelle 30 eine Vierdraht-Schnittstelle, so daß ein Gegensprechverkehr mit einem von ihr gerufenen, bei einem Teilnehmer installierten Fernsprechapparat möglich ist. Das Anpassungsmodul fungiert als Verbindungsglied zwischen der Zweidraht-Schnittstelle der TK-Anlage 10 und der Vierdraht-Schnittstelle der Türfreisprechstelle 30.

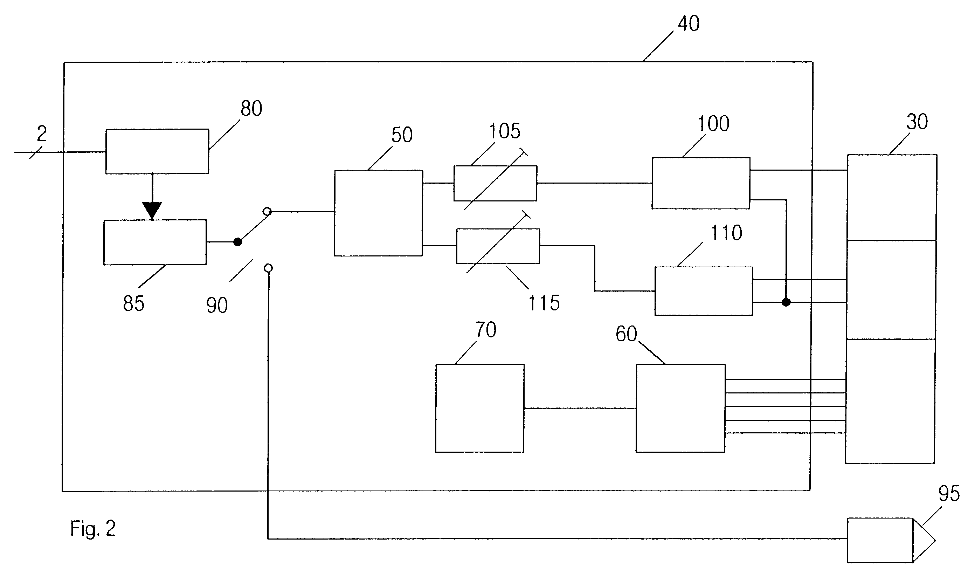

Der Aufbau und die Funktionsweise des erfindungsgemäßen Anpassungsmoduls 40 sind am besten aus Fig. 2 ersichtlich. Die wichtigste Schaltung des Anpassungsmoduls 40 ist eine Zweidraht-Vierdraht-Umsetzeinrichtung 50, die vorteilhafterweise als Gabelschaltung ausgebildet sein kann. Diese Zweidraht-Vierdraht-Umsetzeinrichtung 50 hat die Aufgabe, die von der TK-Anlage 10 über deren Zweidraht-Schnittstelle kommenden Signale auf die Vierdraht-Schnittstelle der Türfreisprechstelle 30 umzusetzen. Am Eingang des Anpassungsmoduls 40 befindet sich ein Stromart-Detektor 80, der den von der TK-Anlage 10 kommenden Wechselstrom oder Gleichstrom erkennt. Unter Ansprechen auf das Ergebnis des Stromart-Detektors 80 wird eine Umschalteinrichtung 85 gesteuert. Erkennt der Stromart-Detektor 80 einen Wechselstrom, der über die Wechselstromquelle 132 und die Umschalteinrichtung 26 zum Anpassungsmodul 40 übertragen wird, betätigt die Umschalteinrichtung 85 den Schaltkontakt 90, z.B. einen Relaiskontakt, so daß der Wechselstrom zum Türöffner 95 übertragen wird. In dem gerade beschrieben Fall stellt die TK-Anlage 10 die Energieversorgung für den Türöffner 95 zu Verfügung. Ist dies aus technischen Gründen nicht sinnvoll, kann ein externes Speisegerät, ein sogenannter Klingeltransformator, für die Speisung des Türöffners 95 angeschaltet werden. Die Anschaltung kann über einen zweipoligen potentialfrreien Relaiskontakt erfolgen. Ferner kann dem Stromart-Detektor 80 ein Stromstärke-Detektor vorgeschaltet sein (nicht dargestellt). Dieser Stromstärke-Detektor stellt fest, ob es sich bei dem von der Gleichstromquelle 130 gelieferten Gleichstrom um einen Ruhestrom von beispielsweise 30 mA oder um den Speißestrom von beispielsweise 80 mA für die Türfreisprechstelle 30 handelt. Erkennt der Stromart-Detektor 80 in Verbindung mit dem Stromstärke-Detektor einen Betriebsgleichstrom von beispielsweise 80 mA, so wird der Kontakt 90 über die Umschalteinrichtung 85 an die Zweidraht-Vierdraht-Umsetzeinrichtung 50 angelegt. Auf diese Weise wird der Hör-Sprech-Weg von der TK-Anlage 10 zur Türfreisprechstelle 30 einmal über ein Potentiometer 105 und einen Lautsprecherverstärker 100 zum Lautsprecher der Türsprechstelle und zum anderen über ein Potentiometer 115 und einen Mikrophonverstärker zum Mikrophon der Türfreisprechstelle 30 durchgeschaltet. Mit dem Potentiometer 105 wird die Lautstärke des Lautsprechers und mit dem Potentiometer 115 wird die Lautstärke des Mikrofons der Türsprechstelle 30 eingestellt. Der erkannte Betriebsgleichstrom kann auch dazu benutzt werden, beliebige Zustandsindikatoren (z.B. zur Anzeige der Gesprächsbereitschaft der Anlage) in der Türfreisprechstelle 30 anzusteuern. Ebenso könnte ein von dem Stromstärke-Detektor erkannte Ruhestrom zusätzlich dazu benutzt werden, eine Beleuchtung an der Türfreisprechstelle 30 anzusteuern. Außerdem weist das Anpassungsmodul 40 noch eine Klingeltasten-Auswerteeinrichtung 60 auf, die beispielsweise Signale von bis zu vier Klingelknöpfen an der Türfreisprechstelle 30 erkennen kann. Die den jeweiligen Klingeltasten zugeordneten Signale werden wahlweise als Mehrfrequenzwahl- (MFV) oder Impulswahl- (IWV) Wahlsignale, die von einem Wahlgenerator 70 über die Zweidraht-Vierdraht-Umsetzeinrichtung 50 an die Zweidraht-Schnittstelle geliefert werden, an die TK-Anlage 10 gesendet. Das Anpassuungs-Modul 40 ist über eine Vierdraht-Schnittstelle mit der Türfreisprechstelle 30 verbunden. Die Vierdraht-Schnittstelle umfaßt zwei Drähte, die zu einer Ader zusammengefaßt sind und ein gemeinsames Bezugspotential bilden. Dies ist in Fig. 2 gezeigt; der Mikrophonverstärker 110 und der Lautsprecherverstärker besitzen eine gemeinsame Bezugsader. Das elektrische Verhalten des Anpassungsmoduls 40 entspricht somit dem eines gewöhnlichen Haustelefons einer Türfreisprechanlage mit einer Vierdraht-Schnittstelle (s. Fig. 2 und die Anschaltung der Verstärker 100, 110 an den entsprechenden Lautsprecher bzw. das Mikrofon der Türsprechstelle 30). Dank des erfindungsgemäßen Anpassungsmoduls 40 ist es nunmehr möglich, bestehende Türfreisprechstellen 30 mit einer Vierdraht-Schnittstelle an nachträglich installierte TK-Anlagen mit einer Zweidraht-Schnittstelle anzuschalten.

Die Funktionsweise der Türfreisprechanlage wird nunmehr kurz erläutert. Um eine Gegensprechverbindung aufzubauen, betätigt ein Besucher eine Klingeltaste an der Türfreisprechstelle 30. Die Klingeltasten-Auswerteinrichtung 60 erkennt die dazugehörige Kennziffer und sendet über den Wahlgenerator entweder ein IWV- oder MFV-Wahlsignal über die Zweidraht-Vierdraht-Umsetzeinrichtung 50 an die Zweidraht-Schnittstelle der TK-Anlage 10. Es sei noch angemerkt, daß die Auswertung der den Klingeltasten zugeordneten Spannungssignale gegenüber den weiteren Schaltungen des Anpassungsmoduls 40 potentialgetrennt erfolgt. Die TK-Anlage 10 ruft anschließend den gewünschten Teilnehmer. Hebt der gerufene Teilnehmer den Handapparat seines Fernsprechapparates ab, wird eine Kennziffer erzeugt, die von der Wahlerkennungs-Einrichtung 22 der TFE-Adapterschaltung 20 in der TK-Anlage 10 derart interpretiert wird, daß nunmehr ein Betriebsgleichstrom von der Gleichstromquelle 130 über die Zweidraht-Schnittstelle zum Anpassungsmodul 40 übertragen werden soll. Der Stromartdetektor 80 erkennt den Gleichstrom und bewirkt, daß die Umschalteinrichtung 85 den Gleichstrom über den Kontakt 90 an die Zweidraht-Vierdraht-Umsetzeinrichtung 50 anlegt. Auf diese Weise wird der Hör-Sprech-Weg zwischen dem gerufenen Teilnehmer und der Türfreisprechstelle 30 durchgeschaltet. Die Verbindung zur Türfreisprechstelle 30 kann auch dadurch aufgebaut werden, daß der gerufene Teilnehmer an seinem Fernsprechapparat eine bestimmte Ziffer oder Ziffernfolge eingibt. Danach wird der obengenannte Prozeß ausgelöst. Der von der Türfreisprechstelle 30 gerufene Teilnehmer kann nunmehr an seinem Fernsprechapparat eine weitere Kennziffer zur Aktivierung des Türöffners eingeben. Diese Kennziffer erkennt die Wahlerkennungs-Einrichtung 22 der TK-Anlage 10, die daraufhin in Verbindung mit der Umschalteinrichtung 26 ein Wechselstromsignal von der Wechselstromquelle 32 zum Anpassungsmodul 40 überträgt. Der Stromart-Detektor 80 des Anpassungsmoduls 40 erkennt den Wechselstrom und steuert das Relais 85, 90 an, so daß der Wechselstrom zum Türöffner 95 übertragen wird. Sobald der Türöffner 95 aktiviert wird, wird der Hör-Sprech-Weg unterbrochen. Die Dauer der Aktivierung des Türöffners bestimmt die Zeitlänge der Unterbrechung des Gesprächszustandes. Aus funktionellen Gründen ist es hierbei möglich, daß die Anlage zwischen dem Gesprächs- und Türöffner-Aktivierungszustand noch einmal in den Ruhezustand zurückgesetzt wird, um Störsignale, wie z.B. Pfeiftöne, durch einen Fehlabschluß an der Türfreisprechstelle zu verhindern. Ist die Aktivierungszeit des Türöffners abgelaufen, erfolgt erneut ein Übergang in den Gesprächszustand, sofern der Teilnehmer noch nicht aufgelegt hat. Die Aktivierung des Türöffners 95 bzw. die Durchschaltung des Hör-Sprech-Weges erfolgt also durch Anlegen eines Wechselstroms 132 bzw. eines Betriebs-Gleichstroms 130.
Es ist auch denkbar, mehrere Türsprechstellen 30 an das Anpassungsmodul anzuschalten. In diesem Fall weist das Anpassungsmodul zusätzlich eine Steuereinrichtung und eine Umschalteinrichtung auf, die derart zusammenwirken, daß nur die Türspechstelle 30 über die Zweidraht-Vierdraht-Umsetzeinrichtung 50 mit der TK-Anlage verbunden wird, deren Klingeltaste betätigt worden ist.

## Patentansprüche

1. Türfreisprechanlage, die einen Gegensprechverkehr zwischen einer Türsprechstelle und einem Fernsprechapparat ermöglicht, der bei einem von der Türfreisprechstelle gerufenen Teilnehmer angeschlossenen ist, mit folgenden Merkmalen:
eine TK-Anlage (10), die eine Zweidraht-Schnittstelle aufweist,
wenigstens ein Fernsprechapparat, der an die TK-Anlage (10) anschaltbar ist,
wenigstens eine Türsprechstelle (30) mit einer Vierdraht-Schnittstelle und
ein Anpassungsmodul (40) mit einer Zweidraht-Vierdraht-Umsetzeinrichtung (50), über die die Türsprechstelle (30) an die TK-Anlage (10) anschaltbar ist.

2. Türfreisprechanlage nach Anspruch 1,
dadurch gekennzeichnet, daß die Zweidraht-Vierdraht-Umsetzeinrichtung eine Gabelschaltung ist.

3. Türfreisprechanlage nach Anspruch 1 oder 2,
dadurch gekennzeichnet, daß das Anpassungsmodul (40) weitere Merkmale enthält:
eine Klingeltasten-Auswerteeinrichtung (60), einen Wahlgenerator (70) zur Erzeugung von IWV- oder MFV-Wahlsignalen,
einen Stromart-Detektor (80), der unter Ansprechen auf einen Wechselstrom über einen Umschalter (90) einen Türöffner (95) aktiviert und unter Ansprechen auf einen Betriebs-Gleichstrom den Hör-Sprechweg von der Türsprechstelle (30) über die Zweidraht-Vierdraht-Umsetzeinrichtung (50) zum Fernsprechapparat des gerufenen Teilnehmers durchschaltet,
einen einstellbaren Lautsprecher (100)- und Mikrophon-Verstärker (110), die mit dem Lautsprecher bzw. dem Mikrophon der Türsprechstelle verbunden sind.

4. Türfreisprechanlage nach einem der Ansprüche 1 bis 3, dadurch gekennzeichnet, daß die Stromversorgung des Anpassungsmoduls (40) über eine extern anschaltbare Gleichstrom-Wechselstromquelle (130) oder aus der TK-Anlage (10) erfolgen kann.

5. Türfreisprechanlage nach einem der Ansprüche 1 bis 4, dadurch gekennzeichnet, daß das Anpassungsmodul (40) eine Stromquelle (130) aufweist, die den Speisestrom für die Türsprechstelle (30) liefert.

6. Türfreisprechanlage nach einem der Ansprüche 1 bis 5, dadurch gekennzeichnet, daß die TK-Anlage (10) eine Steuereinrichtung (140), eine Wahlerkennungseinrichtung (150) und ein Koppelfeld (160) aufweist, das mit einer TFE-Schaltung (20) verbunden ist, die wiederum über die Zweidraht-Schnittstelle der TK-Anlage (10) mit dem Anpassungsmodul (40) verbunden ist.

7. Türfreisprechanlage nach einem der Ansprüche 1 bis 6, dadurch gekennzeichnet, daß das Anpassungsmodul (40) eine Steuereinrichtung und eine weitere Umschalteinrichtung aufweist, die derart zusammenwirken, daß von mehreren an das Anpassungsmodul (40) angeschalteten Türsprechstellen immer nur eine Türsprechstelle (30) mit der TK-Anlage (10) verbunden ist.
